# EUROPEAN PATENT APPLICATION

(11) **EP 2 369 818 A1**
(43) Date of publication of application: **28.09.2011**
(21) Application number: 10168567.5
(22) Date of filing: 06.07.2010
(51) Int. Cl.: H04M 1/22, G06F 3/033

(54) **A three-dimensional illuminated area for optical navigation**

(30) Priority: 25.02.2010 EP 10154741
(71) Applicant: Research In Motion Limited, Waterloo, ON N2L 3W8 (CA)
(72) Inventor: Braun, Petra, 44799 Bochum (DE); Lowles, Robert, Waterloo Ontario N2L 3W8 (CA); Ramrattan, Colin Shiva, Waterloo Ontario N2L 3W8 (CA)
(74) Representative: Fennell, Gareth Charles

(57) **Abstract**

A navigation module for a handheld communication device 100 having a navigation pad 306, a chrome-like area 304 proximate the navigation pad 306, and a three-dimensional illumination area 302 proximate the navigation pad. The three-dimensional illumination area 302 can be interposed between the chrome-like area 304 and the navigation pad 306. The chrome-like area 304 can be interposed between the three-dimensional illumination area 302 and the navigation pad 306.

## Description

### CROSS-REFERENCE TO RELATED APPLICATIONS

This application claims benefit of priority from European Patent application EP10154741, filed February 25, 2010, which application is fully incorporated by reference herein.

### FIELD OF TECHNOLOGY

The present disclosure relates generally to a three-dimensional illuminated surface. More specifically, the present disclosure relates to illuminating one or more rings that are proximate a navigation pad of an optical navigation module for a handheld communication device.

### BACKGROUND

With the advent of more robust mobile electronic systems, advancements of handheld communication devices are becoming more prevalent. Handheld communication devices can provide a variety of functions including, for example, telephonic, electronic messaging and other personal information manager (PIM) application functions. Handheld communication devices include mobile stations such as simple cellular telephones, smart telephones, wireless PDAs, wired PDAs, and reduced-sized laptop computers. Due to the flexibility of handheld communication devices, users are becoming more dependent on handheld communication devices and use the handheld communication devices beyond working hours and in poor lighting conditions. Some handheld communication device manufacturers have responded to user needs and have added lighting features to the handheld communication devices. Some of the lighting features include lighted display screens, lighted keyboards, and lighted trackballs or track wheels. The different lighting features can allow users to use handheld communication devices in poor lighting conditions. In addition, some users like features that look like metal on the handheld communication devices, In some cases, users will purchase a handheld communication device with features that look like metal over a similar device without the features that look like metal. However, using real metal can cause electrostatic discharges which can interfere with the operation of the handheld communication devices.

### BRIEF DESCRIPTION OF THE DRAWINGS

Implementations of the present application will now be described, by way of example only, with reference to the attached Figures, wherein;

Figure 1A is a front view of a handheld communication device having a reduced QWERTY keyboard in accordance with an exemplary implementation;

Figure 1B is a front view of a handheld communication device having a full QWERTY keyboard in accordance with an exemplary implementation;

Figure 2 is a block diagram representing a handheld communication device interacting in a communication network in accordance with an exemplary implementation;

Figure 3A is a top view of an optical navigation module with a chrome-like area interposed between a navigation pad and a three-dimensional illumination area in accordance with an exemplary implementation;

Figure 3B is a cross-sectional view of the optical navigation module with the three-dimensional illumination area interposed between the navigation pad and the chrome-like area in accordance with an exemplary implementation;

Figure 3C is a top view of the optical navigation module without the navigation pad and with the three-dimensional illumination area proximate the chrome-like area in accordance with an exemplary implementation;

Figure 4A is a top view of an optical navigation module with a chrome-like area interposed between a navigation pad and a three-dimensional illumination area in accordance with another exemplary implementation;

Figure 4B is a cross-sectional view of the optical navigation module with the three-dimensional illumination area interposed between the navigation pad and the chrome-like area in accordance with the implementation shown in Figure 4A;

Figure 4C is a top view of the optical navigation module without the navigation pad and with the chrome-like area proximate the three-dimensional illumination area in accordance with the implementation shown in Figure 4A;

Figure 5A is a top view of an optical navigation module with a single chrome-like area proximate a navigation pad in accordance with yet another exemplary implementation;

Figure 5B is a cross-sectional view of the optical navigation module with the single chrome-like area proximate the navigation pad in accordance with the implementation shown in Figure 5A; and

Figure 5C is a top view of the optical navigation module without the navigation pad and with the single chrome-like area in accordance with the implementation shown in Figure 5B.

### DETAILED DESCRIPTION

For simplicity and clarity of illustration, where appropriate, reference numerals have been repeated among the different figures to indicate corresponding or analogous elements. In addition, numerous specific details are set forth in order to provide a thorough understanding of the implementations described herein. However, those of ordinary skill in the art would understand that the implementations described herein can be practiced without the specific details. In other instances, methods, procedures and components have not been described in detail so as not to obscure the related relevant feature being described. Also, the description is not to be considered as limiting the scope of the implementations described herein.

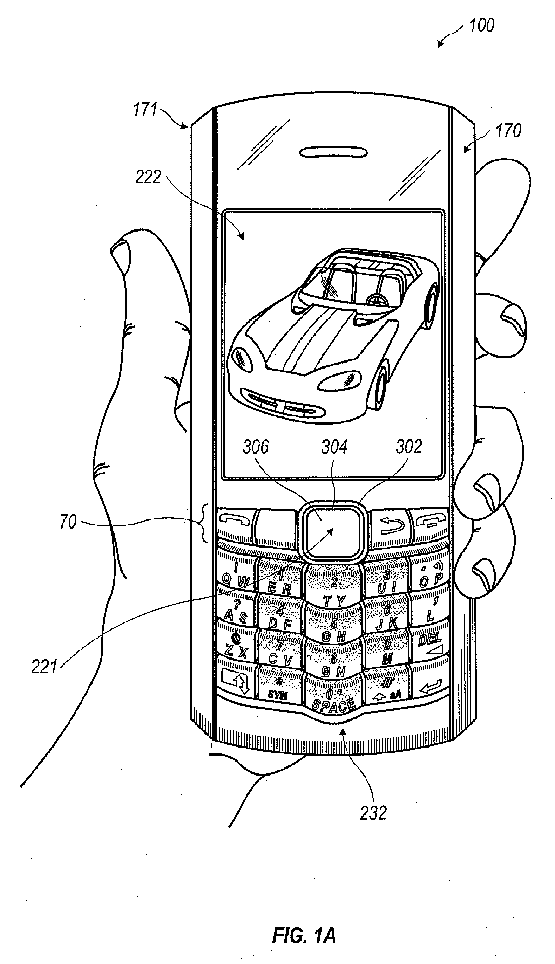

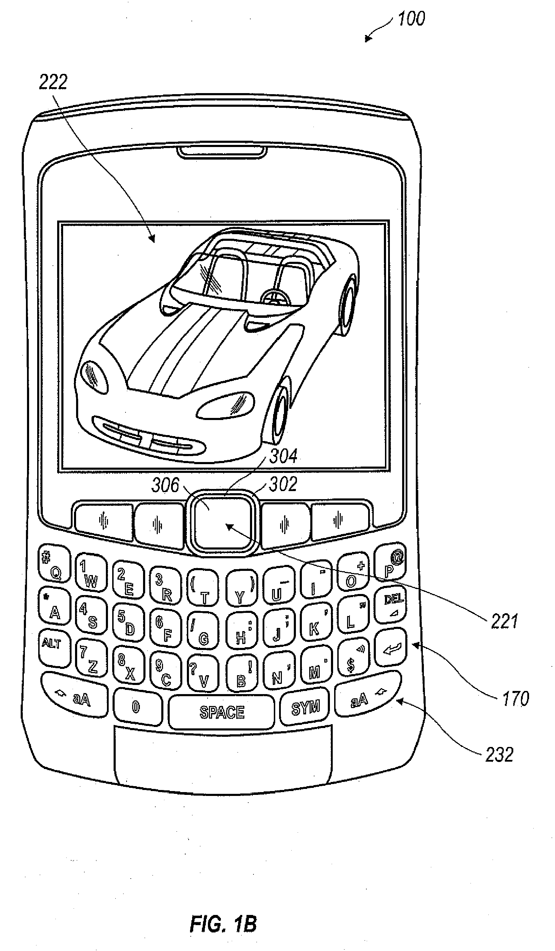

Referring to Figures 1A and 1B, front views of handheld or electronic communication devices 100 having a reduced QWERTY keyboard and a full QWERTY keyboard 232, respectively. Each key of the keyboard 232 can be associated with at least one indicia representing an alphabetic character, a numeral, or a command (such as a space command, return command, or the like). The plurality of the keys having alphabetic characters are arranged in a standard keyboard layout. A standard keyboard layout can be a QWERTY layout (shown in Figures 1A and 1B), a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of this disclosure. The keyboard layout can be based on the geographical region in which the handheld device is intended for sale. In some examples, the keyboard can be interchangeable such that the user can switch between layouts. In other examples, the keyboard is a virtual keyboard provided on a touch screen display (not shown).

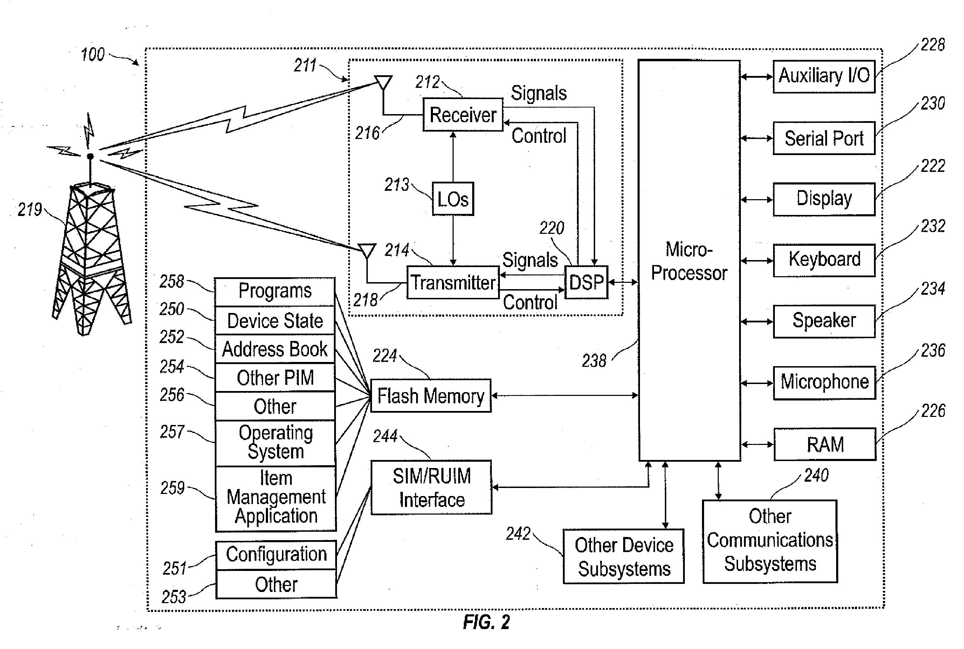

As shown, the exemplary communication devices 100 are communicatively coupled to a wireless network 219 as exemplified in the block diagram of Figure 2. These figures are exemplary only, and those persons skilled in the art will appreciate that additional elements and modifications can be made to make the communication device 100 work in particular network environments. While in the illustrated implementations, the communication devices 100 are smart phones, however, in other implementations, the communication devices 100 can be personal digital assistants (PDA), laptop computers, desktop computers, servers, or other communication device capable of sending and receiving electronic messages.

Referring to Figure 2, a block diagram of a communication device in accordance with an exemplary implementation is illustrated. As shown, the communication device 100 includes a microprocessor 238 that controls the operation of the communication device 100. A communication subsystem 211 performs all communication transmission and reception with the wireless network 219. The microprocessor 238 further can be communicatively coupled with an auxiliary input/output (I/O) subsystem 228 which can be communicatively coupled to the communication device 100. Additionally, in at least one implementation, the microprocessor 238 can be communicatively coupled to a serial port (for example, a Universal Serial Bus port) 230 which can allow for communication with other devices or systems via the serial port 230. A display 222 can be communicatively coupled to microprocessor 238 to allow for displaying of information to an operator of the communication device 100. When the communication device 100 is equipped with the keyboard 232, the keyboard can also be communicatively coupled with the microprocessor 238. The communication device 100 can include a speaker 234, a microphone, 236, random access memory (RAM) 226, and flash memory 224, all of which can be communicatively coupled to the microprocessor 238. Other similar components can be provided on the communication device 100 as well and optionally communicatively coupled to the microprocessor 238. Other communication subsystems 240 and other communication device subsystems 242 are generally indicated as being functionally connected with the microprocessor 238 as well. An example of a communication subsystem 240 is that of a short range communication system such as BLUETOOTH^{®} communication module or a WI-FI^{®} communication module (a communication module in compliance with IEEE 802.11b) and associated circuits and components. Additionally, the microprocessor 238 is able to perform operating system functions and enables execution of programs on the communication device 100. In some implementations not all of the above components can be included in the communication device 100, For example, in at least one implementation, the keyboard 232 is not provided as a separate component and is instead integrated with a touchscreen as described below.

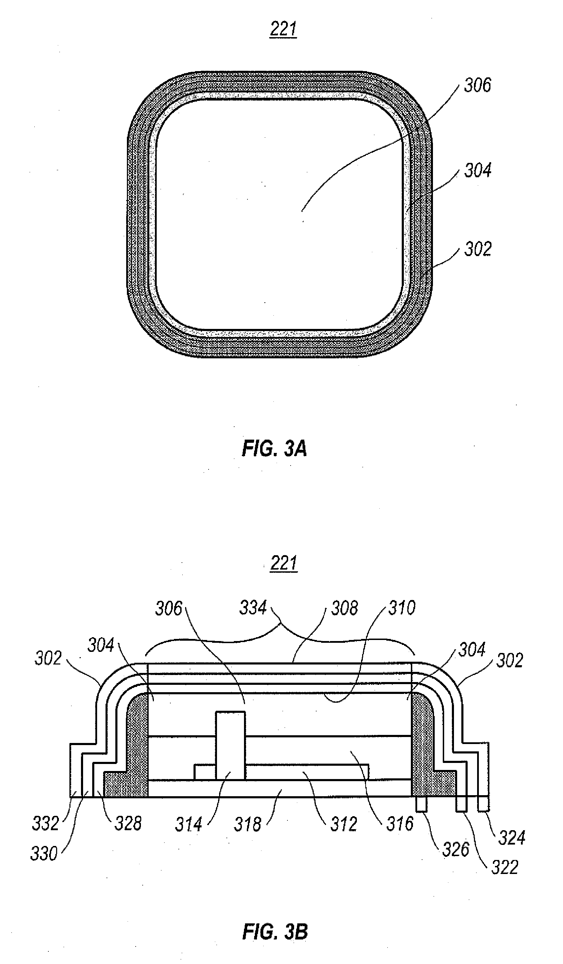

The auxiliary I/O subsystem 228 can take the form of a variety of different navigation tools (multi-directional or single-directional) such as an optical navigation module or tool 221 as illustrated in the exemplary implementation shown in Figures 1A and 1B and shown in more detail in Figures 3A-C, 4A-C, and 5A-C. In other implementations, a trackball, thumbwheel, a navigation pad, a joystick, touch-sensitive interface, or other I/O interface can be used. The navigation tool 221 can be located on a front surface 170 of the communication device 100 or can be located on any exterior surface of the communication device 100. Other auxiliary I/O subsystems can include external display devices and externally connected keyboards (not shown). While the above examples have been provided in relation to the auxiliary I/O subsystem 228, other subsystems capable of providing input or receiving output from the communication device 100 are considered within the scope of this disclosure. Additionally, other keys can be placed along the side of the communication device 100 to function as escape keys, volume control keys, scrolling keys, power switches, or user programmable keys, and can likewise be programmed accordingly.

As can be appreciated from Figures 1A and 1B, the communication device 100 comprises the lighted display 222 located above the keyboard 232 constituting a user input and suitable for accommodating textual input to the communication device 100. The front face 170 of the communication device 100 can have a navigation row 70. As shown, the communication device 100 is of unibody construction, also known as a "candy-bar" design. In alternate implementations, the communication device 100 can be a "clamshell" or a "slider" design.

As described above, the communication device 100 can include the auxiliary input 228 that acts as a cursor navigation tool and which can be also exteriorly located upon the front face 170 of the communication device 100. The location of the navigation tool 221 allows the tool to be easily thumb-actuable like the keys of the keyboard 232. An implementation provides the navigation tool in the form of the optical navigation module 221 having both a capacitive sensor and an optical sensor, which can be utilized to instruct two-dimensional or three-dimensional screen cursor movement or zoom in substantially any direction, as well as act as an actuator when the optical navigation module 221 is depressed like a button. The placement of the navigation tool 221 can be above the keyboard 232 and below the display screen 222; here, the navigation tool 221 can avoid interference during keyboarding and does not block the operator's view of the display screen 222 during use, for example, as shown in Figures 1A and 1B.

As illustrated in Figures 1A and 1B, the communication device 100 can be configured to send and receive messages. The communication device 100 includes a body 171 which can, in some implementations, be configured to be held in one hand by an operator of the communication device 100 during text entry. The display 222 is included which is located on the front face 170 of the body 171 and upon which information is displayed to the operator during text entry. The communication device 100 can also be configured to send and receive voice communications such as mobile telephone calls. The communication device 100 can also include a camera (not shown) to allow the user to take electronic photographs which can be referred to as photos or pictures.

Furthermore, the communication device 100 is equipped with components to enable operation of various programs, as shown in Figure 2. In an exemplary implementation, the flash memory 224 is enabled to provide a storage location for the operating system 257, device programs 258, and data The operating system 257 is generally configured to manage other programs 258 that are also stored in memory 224 and executable on the microprocessor 238. The operating system 257 honors requests for services made by programs 258 through predefined program 258 interfaces. More specifically, the operating system 257 typically determines the order in which multiple programs 258 are executed on the microprocessor 238 and the execution time allotted for each program 258, manages the sharing of memory 224 among multiple programs 258, handles input and output to and from other device subsystems 242, and so on. In addition, operators can typically interact directly with the operating system 257 through a user interface usually including the keyboard 232 and display screen 222. While in an exemplary implementation the operating system 257 is stored in flash memory 224, the operating system 257 in other implementations is stored in read-only memory (ROM) or similar storage element (not shown). As those skilled in the art will appreciate, the operating system 257, device program 258 or parts thereof can be loaded in RAM 226 or other volatile memory.

When the communication device 100 is enabled for two-way communication within the wireless communication network 219, the communication device 100 can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 100 can use a unique identifier to enable the communication device 100 to transmit and receive signals from the communication network 219. Other systems can operate without such identifying information. GPRS, UMTS, and EDGE use a smart card such as a Subscriber Identity Module (SIM) in order to allow communication with the communication network 219. Likewise, most CDMA systems use a Removable User Identity Module (RUIM) in order to communicate with the CDMA network. A smart card can be used in multiple different communication devices 100. The communication device 100 can perform some operations without a smart card, but the communication device 100 can not be able to communicate with the network 219. A smart card interface 244 located within the communication device 100 allows for removal or insertion of a smart card (not shown). The smart card features memory and holds key configurations 251, and other information 253 such as identification and subscriber related information. With a properly enabled communication device 100, two-way communication between the communication device 100 and communication network 219 is possible.

If the communication device 100 is enabled as described above or the communication network 219 does not require such enablement, the two-way communication enabled communication device 100 is able to both transmit and receive information from the communication network 219. The transfer of communication can be from the communication device 100 or to the communication device 100. In order to communicate with the communication network 219, the communication device 100 in the presently described exemplary implementation is equipped with an integral or internal antenna 218 for transmitting signals to the communication network 219. Likewise the communication device 100 in the presently described exemplary implementation is equipped with another antenna 216 for receiving communication from the communication network 219. These antennae (216, 218) in another exemplary implementation are combined into a single antenna (not shown). As one skilled in the art would appreciate, the antenna or antennae (216, 218) in another implementation are externally mounted on the communication device 100.

When equipped for two-way communication, the communication device 100 features the communication subsystem 211. As is understood in the art, the communication subsystem 211 is modified so that the communication subsystem 211 can support the operational needs of the communication device 100. The subsystem 211 includes a transmitter 214 and receiver 212 including the associated antenna or antennae (216, 218) as described above, local oscillators (LOs) 213, and a processing module 220, which in the presently described exemplary implementation is a digital signal processor (DSP) 220.

Communication by the communication device 100 with the wireless network 219 can be any type of communication that both the wireless network 219 and communication device 100 are enabled to transmit, receive and process. In general, the communication can be classified as voice and data. Voice communication generally refers to communication in which signals for audible sounds are transmitted by the communication device 100 through the communication network 219. Data generally refers to all other types of communication that the communication device 100 is capable of performing within the constraints of the wireless network 219.

The keyboard 232 can include a plurality of keys that can be of a physical nature such as actuable buttons, or the plurality of keys can be of a software nature, typically constituted by virtual representations of physical keys on the display screen 222 (referred to herein as "virtual keys"). The user input can be provided as a combination of the two types of keys. Each key of the plurality of keys can have at least one actuable action which can be the input of indicia such as a character, a command or a function. "Characters" are contemplated to exemplarily include alphabetic letters, language symbols, numbers, punctuation, insignias, icons, pictures, and even a blank space.

In the case of virtual keys, the indicia for the respective keys are shown on the display screen 222, which in one implementation is enabled by touching the display screen 222, for example, with a stylus, finger, or other pointer, to generate the character or activate the indicated command or function. Some examples of display screens 222 capable of detecting a touch include resistive, capacitive, projected capacitive, infrared and surface acoustic wave (SAW) touchscreens.

Physical and virtual keys can be combined in many different ways as appreciated by those skilled in the art. In one implementation, physical and virtual keys are combined such that the plurality of enabled keys for a particular program or feature of the communication device 100 is shown on the display screen 222 in the same configuration as the physical keys. Using the configuration just described, the operator can select the appropriate physical key corresponding to what is shown on the display screen 222. Thus, the desired character, command or function is obtained by depressing the physical key corresponding to the character, command or function displayed at a corresponding position on the display screen 222, rather than touching the display screen 222.

While the above description generally describes the systems and components associated with a handheld communication device, the communication device 100 could be another communication device such as a PDA, a laptop computer, desktop computer, a server, or other communication device. The communication device 100 can comprise different components or the above system might be omitted in order to provide the desired communication device 100. Additionally, other components not described above can be used to allow the communication device 100 to function in a desired fashion. The above description provides only general components and additional components can be used to enable the system to function. The additional systems and components would be appreciated by those of ordinary skill in the art.

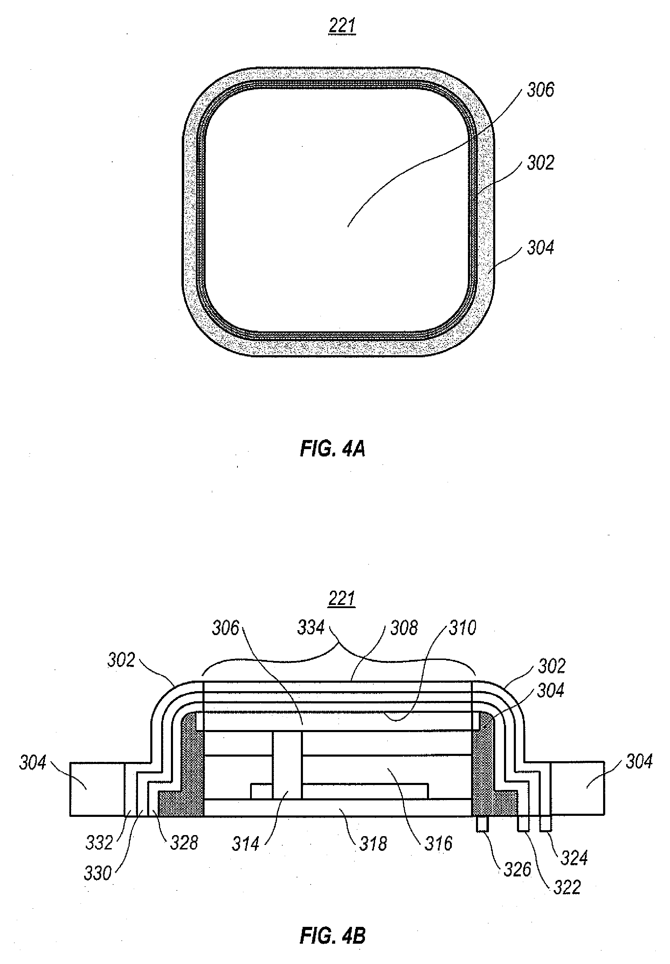

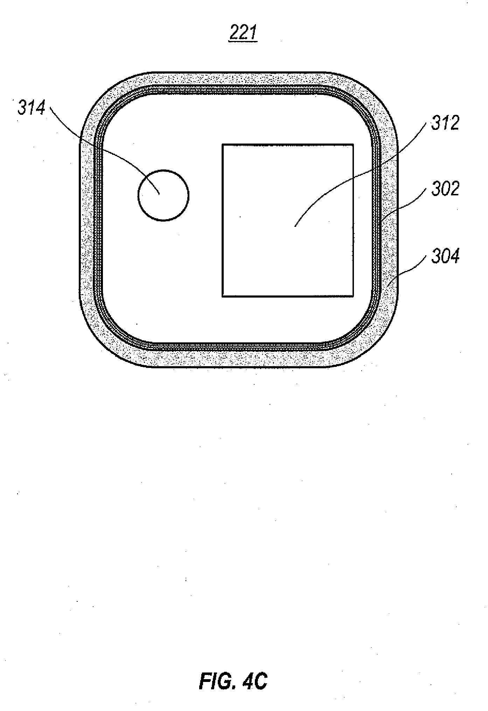

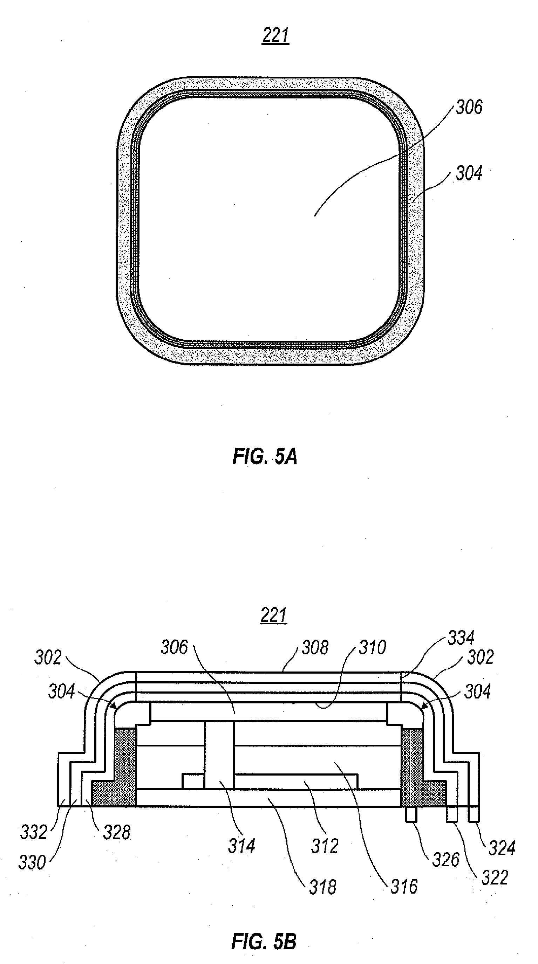

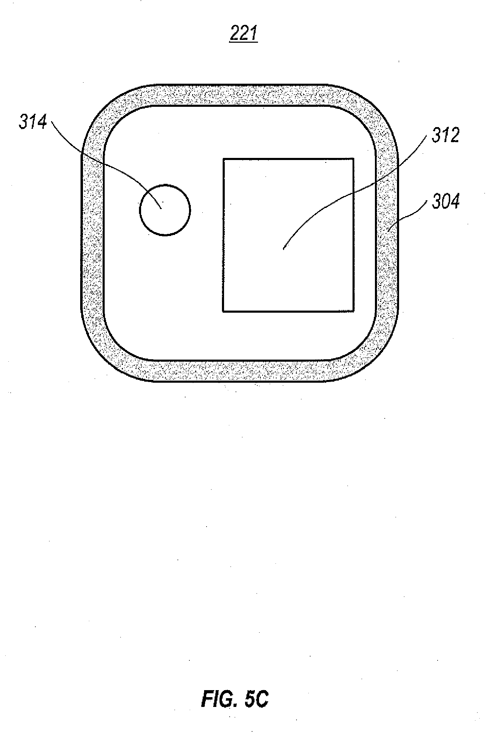

Referring to Figures 3A, 4A, and 5A, top views of the optical navigation module 221 in accordance with exemplary implementations are illustrated. Different exemplary implementations may be used to constitute the optical navigation module based on subjective design choices. As shown in Figure 3A, the optical navigation module 221 can have a chrome-like area 304 interposed between an electroluminescent (EL) foil area 302 and a navigation pad 306. Chrome-like area 304 and EL foil area 302 can be in the shape of rings or other shapes that do not completely surround the navigation pad 306. Specifically, the EL foil area 302 is proximate the chrome-like area 304, which is proximate the navigation pad 306. As shown in Figure 4A, the optical navigation module 221 can have an EL foil area 302 interposed between a chrome-like area 304 and the navigation pad 306. The EL foil area 302 can have three dimensions as illustrated by the contour lines in the figures. Specifically, the chrome-like area 304 is proximate the EL foil area 302, which is proximate the navigation pad 306. As shown in Figure 5A, the optical navigation module 221 can have a chrome-like area 304 proximate the navigation pad 306. As shown, the EL foil area 302 and chrome-like area 304 can be substantially square with rounded corners. In one or more other implementations, the EL foil area 302, chrome-like area 304 or both rings 302, 304 can be different shapes. The chrome-like area 304 can be made using an opaque material or materials which can reduce or prevent light from passing through, or the chrome-like area 304 can be made using a translucent material or materials which can allow light to pass through. Accordingly, if the chrome-like area can 304 allow light to pass through, the EL foil area 302 can be formed below the chrome-like area 304 which will illuminate along with the EL foil area when illuminated. The chrome-like area 304 can be made of a material or materials that provide a metal-like texture, finish or both, e.g., chrome-like. The EL foil area 302 and chrome-like area 304 can be made of a non-conductive material or materials which can assist in reducing electrostatic discharge (ESD).

Referring to Figures 3B, 4B, and 5B a clear protective surface 334 can be seen; clear protective surface 334 can permit light to penetrate and reach an optical sensor 312 provided below the navigation pad 306. The clear protective surface 334 can protect the optical navigation module 221 from abrasive damage.

EL foil area 302 can comprise layers (328, 330 and 332) of polycarbonate (PC) or polypropylene (PP) materials. Layers 332 and 328 can comprise conductive materials, such as silver ink, and a dielectric layer 330 constituting one or more capacitors. The layer 330 can comprise inorganic crystals that emit light when an electric field is applied. EL foil area 302 can be electrically coupled to electrodes 322 and 324. Inverter 326 can also be coupled to electrodes 322 and 324. In the implementation of FIG. 3B, the electrode 322 is coupled to a bottom electrode in layer 328 and the electrode 324 is coupled to a top electrode in layer 328 to form a parallel-plate capacitor. The electrodes 322 and 324 can be electrically coupled to the inverter 326 for conversion of DC current to AC current. Inverter 326 can be controlled by a microprocessor 238 (not illustrated) that can cause the AC current to be supplied to the electrodes 322 and 324. When an AC current is applied to the electrodes 322 and 324, inorganic crystals (not shown) in nonconductive layer 330 become excited and emit a substantially monochromatic light. The monochromatic light can illuminate the navigation pad 306.

The EL foil can be molded in three dimensions, thereby allowing for many shapes for EL foil area 302. An exemplary three-dimensional EL foil that could be formed into an area is made by Bayer MaterialScience AG of Leverkusen Germany, which is called "EL Smart Surface Technology." Many users find light from an EL foil to be more pleasing than light from a light emitting diode or incandescent bulb or LED because the light is more even—while bright, the EL foil will not produce light with an uneven intensity that can cause discomfort as incandescent and LED lamps will. Moreover, light from the EL foil area 302 is less likely to contaminate optical sensor 312 than other forms of lights because light will be less likely to be spuriously detected at the optical sensor 312. The light from the EL foil area 302 will be less likely to be indirectly detected because the light is emitted away from the optical sensor 312 as compared to other light sources such as LEDs that tend to disperse light in all directions, thereby contaminating the optical sensor 312 with unwanted light. Therefore, the EL foil area 302 is superior to other forms of lighting because the optical navigation module can perform better when more of the light sensed by optical sensor 312 is for user input instead of interference from other light.

A raised, three-dimensional EL foil area 302 can also provide additional benefits. For example, the EL foil area 302 can provide light horizontally across the front face 170 of communication device 100. This can be helpful in locating communication device 100 because light can be emitted in directions as needed to aid in increasing visibility of the communication device 100.

The chrome-like area 304 can comprise non-conductive vacuum metallization (NCVM). In at least one implementation, other methods or materials can be used to create the chrome-like area 304. NCVM can assist in reducing ESD. NCVM is manufactured by Dynatec Corporation of Richmond Hill, Ontario. Dynatec Corporation was acquired by FNX Mining Company of Toronto, Ontario. NCVM can provide a metal film or thin metal film over a resin surface. The metal film can provide a metal-like look (e.g., texture, finish or both such as a chrome-like look, which is desirable by some users. The thin metal film can be coated with an ultra violet (UV) coating to provide a surface hardness and adhesion comparable to plating. The NCVM can be done using two different processes: general deposition and discontinuous deposition. In some implementations, the chrome-like area 304 can reduce or prevent light from passing through, and in other implementations the chrome-like area 304 can allow light to pass through. For implementation in which the chrome-like area 304 allows light to pass through, the light can pass through the chrome-like area 304 from the top down, thereby permitting light reflected towards the optical sensor 312 to pass through for detection of movement. In other embodiments, the chrome-like area can be printed between the layers 328, 330 and 332. For example, a chrome-like material, using, for example, the process above, can be deposited between layers 328 and 330.

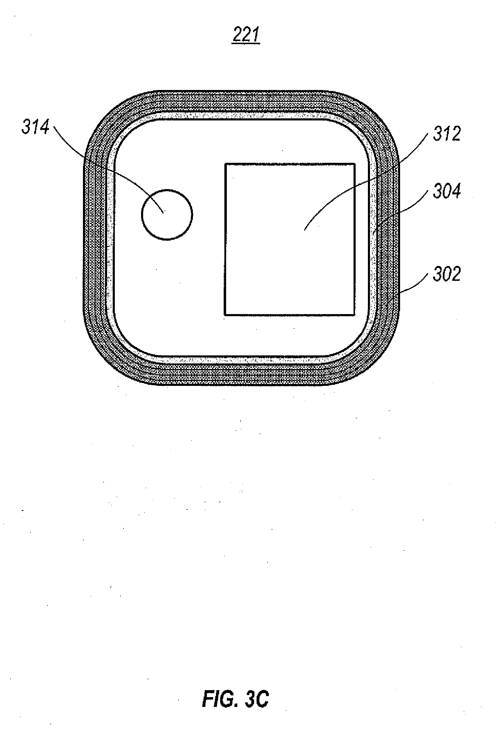

Referring still to Figures 3B, 4B, and 5B, cross-sectional views of the optical navigation module 221 in accordance with exemplary implementations are shown. Specifically, Figure 3B is a cross-sectional view of the optical navigation module 221 with the chrome-like area 304 interposed between the EL foil area 302 and the navigation pad 306. Figure 4B is a cross-sectional view of another implementation of the optical navigation module 221 with the EL foil area 302 interposed between the chrome-like area 304 and the navigation pad 306. Figure 5B is a cross-section view of yet another implementation of the optical navigation module 221 with the chrome-like area 304 proximate the navigation pad 306. As shown in Figures 3B, 4B, and 5B, the optical navigation module 221 can include the navigation pad 306 which can include a top surface 308 and a bottom surface 310. The optical navigation module 221 can include the optical sensor 312, a capacitive sensor 314, or both. The optical navigation module can also optionally include a mechanical dome switch, not illustrated. The optical sensor 312 and capacitive sensor 314 can be positioned below the bottom surface 310 of the navigation pad 306. The optical sensor 312 can be configured to detect movement of an object in the X axis, Y axis or both when the object is in contact with the top surface 308 of the navigation pad 306 via light that passes through the clear protective surface 334. A lens 316 can be coupled to the optical sensor 312. The lens 316 can improve the field of view of the optical sensor 312. Specifically, lens 316 can be matched to the navigation pad 306 to improve the field of view for the optical sensor 312 such that the entire top surface 308 of the navigation pad 306 is in the field of view of the optical sensor 312. Expanding the field of view of optical sensor 321 can aid in detecting an object (not shown) in contact with a part of the top surface 308 of the navigation pad 306. In at least one implementation, the optical sensor 312 can be an ADNS-5700 optical sensor and the lens 316 can be an ADNS-5100 round lens, ADNS-5100-001 trim lens, or the ADNS-5100-002 truncated round lens by Avago Technology of San Jose, California. In other implementations, other optical sensors 312 and lenses 316 can be used. Figures 3C, 4C, and 5C show top views of exemplary implementation of the optical navigation module 221, without the navigation pad 306, in order to show relative positioning of the optical sensor 312 and capacitive sensor 314. In one or more implementations, the optical sensor 312 and capacitive sensor 314 can be positioned differently.

The capacitive sensor 314 can be configured to detect movement of an object (not shown) above the top surface 308 of the navigation pad 306 in the Z axis when the object is within a given or set range of the top surface 308 of the navigation pad 306. The capacitive sensor 314 can use a magnetic field to detect an object above the top surface 308 of the navigation pad 306. In at least one implementation, the capacitive sensor 314 can be a single electrode connected to a capacitive sensor. In at least one implementation, the capacitive sensor 314 can be an AD7147 IC by Analog Devices of Norwood, Massachusetts. In other implementations, other capacitive sensors 314 can be used. The given or set range is dependent on the capacitive sensor. In one exemplary implementation, the range is less than five millimeters (5 mm) in the Z axis. In at least one implementation, the capacitive sensor (e.g., the AD7147 IC) can be modified to detect movement in the X axis and Y axis. The optical sensor 312 and capacitive sensor 314 can be communicatively coupled to a printed circuit board (PCB) 318. In at least one implementation, the PCB 318 is part of the navigation tool 221. The PCB 318 can be communicatively coupled to the microprocessor 238.

When an object is in contact or near top surface 308, light reflected by the object can be reflected back to optical sensor 312. Most of the light can travel through the clear protective surface 334, but some can be reflected back by the chrome area 304. However, if the chrome-like area 304 is translucent, the light can travel through the chrome-like area 304 to assist detection of light at optical sensor 312. The optical sensor 312 can be, for example, a charge-coupled device (CCD). In a CCD, light that enters the CCD produces a electric charge proportional to light intensity. The electric charge potential can be converted into a digital signal and processed by microprocessor 238 to detect movement over optical sensor 312. The CCD is only exemplary, and other optical sensors, for example, photoresistors and photoconductive camera tubes, can be substituted.

Each electrode 322 and 324 can be communicatively coupled to the microprocessor 238, which can control power to the electrodes 322 and 324. The handheld communication device 100 can include a light sensor (not shown) coupled to the microprocessor 238 to determine when to activate (e.g., turn on) the one or more electrodes 322 and 324. The illumination features for the optical navigation tool 221 can be tied to or coupled with an illumination feature for the keyboard 232. For example, the illumination feature for the optical navigation tool 221 can be in a sleep mode, e.g., the microprocessor 238 causes the EL foil area 302 to be off, when the light sensor of the handheld electronic device 100 indicates that there is sufficient light or when the handheld electronic device is in a sleep mode. The illumination feature for the optical navigation tool 221 can be in an active mode, e.g., the microprocessor 238 can cause the EL area 302 to be activated, when the light sensor of the handheld electronic device 100 indicates that there is insufficient light.

As described above, in one or more implementations, the navigation module 221 for the handheld electronic device 100 can include the navigation pad 306 proximate in the X-Y plane by the EL foil area 302 and the chrome-like area 304. The EL foil area 302 can be interposed between the navigation pad 306 and the chrome-like area 304 or the chrome-like area 304 can be interposed between the navigation pad 306 and the EL foil area 302. The EL foil area 302, that is proximate the navigation pad 306, can illuminate thus providing guidance to the location of the navigation pad 306 thereby allowing a user to see the navigation pad 306. The EL foil area 302 and chrome-like area 304 can be one area or two rings. In one implementation, the EL foil area 302 and chrome-like area 304 can be one area with an illumination part and a chrome-like part. The chrome-like area 304 can also provide illumination when the chrome-like area 304 is made of a translucent material and overlaps the EL foil 302. Thus, the chrome-like area 304 can have a chrome appearance when the chrome-like area is not illuminated, e.g., when light is not needed, and can provide illumination when light is needed.

Exemplary implementations have been described hereinabove regarding the implementation of an illumination feature for a navigation tool for handheld communication devices. Although the exemplary implementations have been described as having a chrome-like area 304, other metal-like rings can be used in place of the chrome-like area 304. For example, a silver-like area or gold-like area can be used to provide a metal-like look, e.g., texture, finish or both. In addition, a mechanical dome switch can be used instead of the capacitive sensor. Various modifications to and departures from the disclosed implementations will occur to those having skill in the art. The subject matter that is intended to be within the spirit of the disclosure is set forth in the following claims.

## Claims

1. A navigation module for a handheld communication device, the navigation module comprising:
a navigation pad having a top surface and a bottom surface;
a chrome-like ring surrounding the navigation pad;
a three-dimensional illumination ring around the navigation pad; and
an optical sensor positioned below the bottom surface of the navigation pad and configured to detect movement of an object in at least one of X axis and Y axis in the event the object is in contact with the top surface of the navigation pad.

2. The navigation module of claim 1, wherein the three-dimensional illumination ring is an electroluminescent foil.

3. The navigation module of claim 1 or 2 further comprising a capacitive sensor positioned below the bottom surface of the navigation pad and configured to detect movement of the object above the top surface of the navigation pad in the Z axis in the event the object is within a range of the top surface of the navigation pad.

4. The navigation module of claim 1, 2 or 3, wherein the three-dimensional illumination ring and chrome-like ring are positioned with one of the three-dimensional illumination ring being interposed between the chrome-like ring and the navigation pad and the chrome-like ring being interposed between the three-dimensional illumination ring and the navigation pad.

5. The navigation module of claim 1, 2, 3 or 4, further comprising a lens between the bottom surface of the navigation pad and the optical sensor; and further comprising a printed circuit board communicatively coupled to the optical sensor and the capacitive sensor.

6. The navigation module of claim 1, 2, 3, 4, or 5,
wherein the printed circuit board is communicatively coupled to a microprocessor with the microprocessor communicatively coupled with the optical sensor, the capacitive sensor, and the three-dimensional illumination ring; and
wherein the microprocessor is configured to cause the three-dimensional illumination ring to illuminate.

7. The navigation module of claim 1, 2, 3, 4, 5 or 6, further comprising a clear protective surface comprising a portion of layers that also form the three-dimensional illumination ring.

8. A handheld device comprising:
a navigation pad having a top surface and a bottom surface;
a chrome-like ring surrounding the navigation pad;
a three-dimensional illumination ring surrounding the navigation pad;
an optical sensor positioned below the bottom surface of the navigation pad and configured to detect movement of an object in at least one of X axis and Y axis in the event the object is in contact with the top surface of the navigation pad; and
a microprocessor communicatively coupled to capacitive sensor, and optical sensor.

9. The handheld communication device of claim 8, further comprising a clear protective surface comprising a portion of layers that also form the three-dimensional illumination ring.

10. The handheld communication device of claim 8 or 9, wherein the chrome-like ring is formed using non-conductive vacuum metallization (NCVM).

11. The handheld communication device of claim 8, 9 or 10, wherein the three-dimensional illumination ring and chrome-like ring are positioned with one of the three-dimensional illumination ring being interposed between the chrome-like ring and the navigation pad, and the chrome-like ring being interposed between three-dimensional illumination ring and the navigation pad.

12. The handheld communication device of claim 8, 9 10 or 11,
further comprising a lens between the bottom surface of the navigation pad and the optical sensor; and
further comprising a printed circuit board communicatively coupled to the optical sensor and the capacitive sensor.

13. The handheld communication device of claim 8, 9, 10, 11 or 12,
wherein the microprocessor is configured to cause the three-dimensional illumination ring to illuminate; and
wherein the chrome-like ring is configured to allow light to pass through for detection at the optical sensor.

14. An optical navigation module for a handheld communication device, the optical navigation module comprising:
a navigation pad having a top surface and a bottom surface;
a chrome-like ring surrounding the navigation pad and adapted to illuminate;
a capacitive sensor positioned below the bottom surface of the navigation pad and configured to detect movement of an object above the top surface of the navigation pad in the Z axis in the event the object is within a set range of the top surface of the navigation pad; and
an optical sensor positioned below the bottom surface of the navigation pad and configured to detect movement of the object in at least one of X axis and Y axis in the event the object is in contact with the top surface of the navigation pad.

15. The optical navigation module of claim 14,
wherein the three-dimensional illumination ring is an electroluminescent foil; and
wherein the chrome-like ring comprises non-conductive vacuum metallization (NCVM).

## Amended claims

### Amended claims in accordance with Rule 137(2) EPC.

**1.** A navigation module (221) for a handheld communication device (100), the navigation module (221) comprising:
a navigation pad (306) having a top surface (308) and a bottom surface (310);
a ring having a chrome-like appearance (304) surrounding the navigationpad (306);
a three-dimensional illumination ring (302) around the navigation pad (306); and
an optical sensor (312) positioned below the bottom surface (310) of the navigation pad (306) and configured to detect movement of an object in at least one of X axis and Y axis in the event the object is in contact with the top surface (308) of the navigation pad (306).

**2.** The navigation module (221) of claim 1, wherein the three-dimensional illumination ring (302) is an electroluminescent foil.

**3.** The navigation module (221) of claim 1 or 2 further comprising a capacitive sensor (314) positioned below the bottom surface (310) of the navigation pad (306) and configured to detect movement of the object above the top surface (308) of the navigation pad (306) in the Z axis in the event the object is within a range of the top surface (308) of the navigation pad (306).

**4.** The navigation module (221) of claim 1, 2 or 3, wherein the three-dimensional illumination ring (302) and ring having a chrome-like appearance (304) are positioned with one of the three-dimensional illumination ring (302) being interposed between the ring having a chrome-like appearance (304) and the navigation pad (306) and the ring having a chrome-like appearance (306) being interposed between the three-dimensional illumination ring (302) and the navigation pad (306).

**5.** The navigation module (221) of claim 3 or 4, further comprising a lens (316) between the bottom surface (310) of the navigation pad (306) and the optical sensor (312); and further comprising a printed circuit board communicatively coupled to the optical sensor and the capacitive sensor.

**6.** The navigation module (221) of claim 5,
wherein the printed circuit board (318) is communicatively coupled to a microprocessor (238) with the microprocessor (238) communicatively coupled with the optical sensor (312), the capacitive sensor (314), and the three-dimensional illumination ring (302); and
wherein the microprocessor (238) is configured to cause the three-dimensional illumination ring (302) to illuminate.

**7.** The navigation module (221) of claim 1, 2, 3, 4, 5 or 6, further comprising a clear protective surface (334) comprising a portion of layers (328, 330 and 332) that also form the three-dimensional illumination ring (302).

**8.** The navigation module (221) of claim 1, 2, 3, 4, 5, 6, or 7, wherein the ring having a chrome-like appearance (304) is formed using non-conductive vacuum metallization (NCVM)

**9.** A handheld device (100) comprising a navigation pad according to one of claims 1-7.

**10.** A handheld device comprising the navigation pad of claim 3, further comprising a microprocessor (238) communicatively coupled to the capacitive sensor (314) and the optical sensor (312).
